# EUROPÄISCHE PATENTSCHRIFT

(11) **EP 3 192 641 B1**
(45) Veröffentlichungstag und Bekanntmachung des Hinweises auf die Patenterteilung: **09.06.2021**
(21) Anmeldenummer: 16150844.5
(22) Anmeldetag: 12.01.2016
(51) Int. Cl.: B29C 51/08, B29C 51/26, B29C 51/32

(54) **FORMSTATION FÜR EINE TIEFZIEHVERPACKUNGSMASCHINE**
MOULDING STATION FOR A DEEP DRAW PACKAGING MACHINE
STATION DE FORMAGE POUR UNE MACHINE D'EMBALLAGE PAR EMBOUTISSAGE

(43) Veröffentlichungstag der Anmeldung: 19.07.2017
(73) Patentinhaber: MULTIVAC Sepp Haggenmüller SE & Co. KG, 87787 Wolfertschwenden (DE)
(72) Erfinder: SCHICHE, Hans-Christian, 87740 Buxheim (DE); GRONDINGER, Bastian, 87463 Dietmannsried (DE)
(74) Vertreter: Grünecker Patent- und Rechtsanwälte PartG mbB

(56) Entgegenhaltungen:
- DE-A1- 3 935 625
- FR-A1- 2 994 122
- US-A- 5 393 474

## Beschreibung

Die Erfindung betrifft das Gebiet der Verpackungsmaschinen. Insbesondere betrifft die Erfindung eine Formstation für eine Tiefziehverpackungsmaschine.

Tiefziehverpackungsmaschinen umfassen eine Formstation, in der durch Tiefziehen eine oder mehrere zusammenhängende Verpackungsmulden in einer Unterfolie geformt werden. Anschließend werden die Verpackungsmulden mit Packgut, beispielsweise mit Lebensmitteln, befüllt und in einer Siegelstation mit einer Oberfolie verschlossen (gesiegelt). Insbesondere im Bereich der Lebensmittelverpackung ist es üblich, vor dem Siegeln die atmosphärische Luft aus der befüllten Verpackung abzusaugen (Evakuieren) und den Verpackungen ein geeignetes (Schutz-)Gas zuzuführen. Bei geeigneter Wahl des Gases lässt sich damit beispielsweise die Haltbarkeit der Lebensmittel erhöhen.

Aus der DE 10 2007 047 058 A1 ist es bekannt, in einem Randbereich der Unterfolie Öffnungen vorzusehen, durch die vor dem Siegeln in der Siegelstation aus den zwischen den Verpackungsmulden und der Oberfolie liegenden Raumbereichen atmosphärische Luft abgesaugt werden kann. Über weitere Öffnungen in der Unterfolie wird dann den Verpackungen vor dem Siegeln geeignetes Gas zugeführt.

Aus der DE 1997 665 U ist eine Tiefziehverpackungsmaschine mit einer Formstation gemäß dem Oberbegriff von Anspruch 1 bekannt. Die Formstation umfasst ein Tiefziehwerkzeug mit einem Formwerkzeugoberteil und einem Formwerkzeugunterteil zum Formen von Verpackungsmulden in einer Unterfolie. Das Tiefziehwerkzeug umfasst ein Messer zum Schlitzen der Unterfolie parallel zur Vorschubrichtung der Unterfolie. Durch die Schlitze können dann in einer nachfolgenden Siegelstation die Verpackungen evakuiert werden.

Aus der DE 39 35 625 A1 ist eine Vorrichtung zum Durchtrennen von flächigen, leicht biegsamen und insbesondere elastischen Werkstücken mit geringer Materialstärke, die gegebenenfalls auch dreidimensional in sich verformt sein können, bekannt. Die Vorrichtung umfasst mindestens ein Zähne aufweisendes Trennmesser an einem Oberwerkzeug und einen Schnittspalt in einem Unterwerkzeug. Die Trennmesser sind mittels Klemmbacken an dem Oberwerkzeug befestigt.

Es ist Aufgabe der Erfindung, eine Formstation für eine Tiefziehverpackungsmaschine bereitzustellen, die schnell und einfach gewartet und für den Einsatz vorbereitet werden kann. Diese Aufgabe wird durch den Gegenstand von Anspruch 1 gelöst. Die abhängigen Ansprüche geben vorteilhafte Ausführungsformen der Erfindung an.

Eine erfindungsgemäße Formstation für eine Tiefziehverpackungsmaschine umfasst ein Formwerkzeugoberteil und ein Formwerkzeugunterteil. Diese sind dazu ausgelegt, zum Tiefziehen einer zwischen dem Formwerkzeugunterteil und dem Formwerkzeugoberteil gelegenen Folie, insbesondere einer Kunststofffolie, zusammenzuwirken. Insbesondere kann die Formstation zum Formen von Verpackungsmulden in der Folie ausgelegt sein. Dazu können in das Formwerkzeugoberteil und/oder das Formwerkzeugunterteil der gewünschten Form für die Verpackungsmulden entsprechende Formmatrizen einsetzbar sein. Zum Tiefziehen können das Formwerkzeugoberteil und das Formwerkzeugunterteil dann aufeinander zubewegt werden, so dass die dazwischen liegende Folie eine den Formmatritzen entsprechende Form annimmt. Alternativ oder zusätzlich kann die Folie von dem Formwerkzeugoberteil oder dem Formwerkzeugunterteil mit Druckluft oder Vakuum beaufschlagt werden, um die Folie an die Formmatrizen anzulegen.

Erfindungsgemäß ist eine Wechselleiste vorgesehen, die eine Vielzahl von Lochstempeln oder eine Vielzahl von Messern, insbesondere gebogenen Messern, trägt. Die Wechselleiste ist an einem Aufnahmebereich des Formwerkzeugunterteils lösbar anbringbar. Die Lochstempel oder Messer können dazu ausgelegt sein, beim Tiefziehen die Folie zu lochen oder zu schlitzen und somit Öffnungen bereitzustellen, die in einem nachfolgenden Bearbeitungsschritt vor dem Siegeln der Verpackungen ein Evakuieren und/oder Mit-Gas-Befüllen der Verpackungen erlauben.

Die erfindungsgemäße Wechselleiste ermöglicht es, die Lochstempel oder Messer einfach und schnell austauschen. Um die Formstation bei Verschleiß der Lochstempel oder Messer, zum Umstellen auf eine andere geometrische Anordnung der Lochstempel oder Messer oder zum Umstellen auf eine andere Schneideart (beispielsweise von Lochstempeln zu Messern) umzurüsten, muss lediglich die Wechselleiste gelöst und durch eine neue Wechselleiste ersetzt werden. Dadurch wird die Stillstandszeit der betreffenden Tiefziehverpackungsmaschine minimiert. Zudem ist die relative Lage der Lochstempel oder der Messer zueinander bereits durch ihre Position an der Wechselleiste festgelegt und damit genau einstellbar. Außerdem lässt sich die Formstation durch Anbringen bzw. Entfernen der Wechselleiste je nach Bedarf schnell und einfach zwischen einem Betriebsmodus, in dem die Folie beim Tiefziehen geschlitzt oder gelocht wird, und einem Betriebsmodus, bei dem kein Schlitzen oder Lochen erfolgt, umstellen.

Um die Beschreibung der Erfindung zu vereinfachen, werden die Formwerkzeugteile der Formstation als "Formwerkzeugoberteil" und "Formwerkzeugunterteil" bezeichnet. Damit soll allerdings nicht eine bestimmte räumliche Orientierung der Formstation vorgegeben sein. Es ist beispielsweise durchaus denkbar, dass das Formwerkzeugunterteil über dem Formwerkzeugoberteil angeordnet ist. Damit ist es auch denkbar, dass der Aufnahmebereich zum Anbringen der Wechselleiste an einem oben gelegenen Formwerkzeugteil vorgesehen ist. Bevorzugt ist allerdings, wenn der Aufnahmebereich an dem unten gelegenen Formwerkzeugteil vorgesehen ist.

Bei der Verwendung einer Wechselleiste mit Messern wird die Folie geschlitzt. Eine Wechselleiste mit Lochstempeln kann zum Lochen der Folie ausgelegt sein. Es ist aber auch denkbar, dass die Folie bei Verwendung einer Wechselleiste mit Lochstempeln nur geschlitzt wird. Hierzu können insbesondere Lochstempel mit einer Kontur verwendet werden, die in Bezug auf die Richtung, in der das Formwerkzeugunterteil und das Formwerkzeugoberteil voneinander beabstandet sind, ein nicht-konstantes Höhenprofil aufweist. So kann bei geeigneter Wahl des Höhenprofils der (jeweiligen) Kontur der Lochstempel jeweils nur ein Teil der Kontur tatsächlich zum Schneiden der Folie beitragen, so dass die Folie nicht gelocht, sondern geschlitzt wird. Vorteilhafterweise werden beim Schlitzen nicht-lineare Schnitte in die Folie eingebracht, so dass in der Folie Klappen entstehen, die scharnierartig zum Freigeben von Öffnungen in der Folie beweglich sind. Dies kann beispielsweise durch gekrümmte Messer oder Lochstempel mit Konturen erreicht werden, die ein nicht-konstantes Höhenprofil aufweisen.

Insbesondere kann die Wechselleiste bezüglich des Formwerkzeugunterteils höhenverstellbar an dem Aufnahmebereich des Formwerkzeugunterteils anbringbar sein, um die Eindringtiefe der Lochstempel oder Messer in die Folie einstellen zu können. Die Anbringungshöhe der Wechselleiste kann beispielsweise durch Stellschrauben und/oder Unterlegscheiben anpassbar sein. Insbesondere kann die Wechselleiste über einen Bereich von maximal 2 mm an dem Aufnahmebereich höhenverstellbar sein. Beim Einsatz von Lochstempeln mit Konturen, die ein nicht-lineares Höhenprofil aufweisen, kann durch einen Höhenverstellung der Wechselleiste eingestellt werde, welche Teile der Konturen der Lochstempel zum Schneiden der Folie beitragen, so dass die Schnittform vorgegeben werden kann.

Der Aufnahmebereich für die Wechselleiste ist seitlich an dem Formwerkzeugunterteil vorgesehen. Dadurch ist der Aufnahmebereich besonders leicht zugänglich. Es ist auch denkbar, dass an beiden Seiten des Formwerkzeugunterteils Aufnahmebereiche vorgesehen sind. In diesem Fall kann zum lösbaren Anbringen an dem zweiten Aufnahmebereich ein zweites Exemplar der Wechselleiste vorgesehen sein, um die Folie symmetrisch zu lochen oder zu schlitzen.

Es ist auch denkbar, dass an dem Aufnahmebereich der Formstation mehrere, insbesondere zwei, jeweils Lochstempel oder Messer tragende Wechselleisten hintereinander lösbar anbringbar sind. Dadurch lassen sich beispielsweise Unterschiede in der bei einem Tiefziehvorgang zu lochenden oder zu schlitzenden Länge der Folie durch Anbringen oder Weglassen der zusätzlichen Wechselleiste einfach realisieren.

Die lösbare Befestigung der Wechselleiste an dem Aufnahmebereich kann durch Anschrauben erfolgen. Die Wechselleiste kann aber auch auf andere Art lösbar an dem Aufnahmebereich befestigt werden. Beispielsweise ist es denkbar, die Wechselleiste magnetisch an dem Aufnahmebereich zu befestigen oder eine lösbare Clip-Verbindung vorzusehen. Je nach Ausgestaltung der Formstation kann es zweckmäßig sein, wenn der Aufnahmebereich gegenüber dem Rest des Formwerkzeugunterteils in Richtung des Formwerkzeugoberteils beweglich ist. Dadurch kann die an dem Aufnahmebereich angebrachte Wechselleiste zum Lochen oder Schlitzen der Folie mit den Lochstempeln oder zum Schlitzen der Folie mit den Messern aktiv auf die Folie zubewegt werden. Nach dem Lochen oder Schlitzen kann die Wechselleiste wieder von der Folie wegbewegt werden, um ein Weiterfördern der Folie aus der Formstation heraus zu ermöglichen.

Die Vielzahl von Lochstempeln oder Messern kann integral an der Wechselleiste verbaut sein. Beispielsweise können die Lochstempel oder Messer bei der Herstellung der Wechselleiste, z.B. aus Kunststoff oder Metall, in einem Gießverfahren eingegossen worden sein. Integral verbaute Lochstempel oder Messer sind besonders stabil befestigt und lassen besonders gut reproduzierbare Ergebnisse beim Lochen oder Schlitzen der Folie erreichen.

Es ist auch denkbar, dass die Lochstempel oder Messer lösbar an der Wechselleiste befestigt sind. Dazu kann an der Wechselleiste für jeden Lochstempel oder für jedes Messer eine Befestigungsstelle vorgesehen sein. Die Lochstempel oder Messer können zur Wartung, insbesondere zum Schärfen, aus der Wechselleiste genommen und dann wieder eingesetzt werden oder zumindest vorläufig durch andere Lochstempel oder Messer ersetzt werden. Die Lochstempel oder Messer können beispielweise an den Befestigungsstellen der Wechselleiste angeschraubt werden. Die Befestigungsstellen können als Öffnungen in der Wechselleiste ausgebildet sein, in die die Lochstempel oder die Messer eingeschoben werden können. Insbesondere Lochstempel, aber auch Messer, lassen sich gut durch Einschieben in Öffnungen in der Wechselleiste und anschließendes Festlegen in der jeweiligen Öffnung mit Feststellschrauben befestigen.

In der Wechselleiste kann eine Vielzahl von Austauschkanälen vorgesehen sein, die jeweils mit einer einen Lochstempel aufnehmenden Öffnung der Wechselleiste in Verbindung stehen. Mittels eines in den entsprechenden Austauschkanal einbringbaren Werkzeugs kann dann ein betreffender Lochstempel aus der ersten Wechselleiste herausgedrückt werden, so dass die Lochstempel der Wechselleiste einfach ausgetauscht werden können.

Um das Lochen oder Schlitzen der Folie zu vereinfachen, kann in einem Aussparungsbereich des Formwerkzeugoberteils eine Vielzahl von Aussparungen derart vorgesehen sein, dass beim Tiefziehen der Folie die Lochstempel oder Messer in die Aussparungen eingreifen. Insbesondere kann jedem Lochstempel oder Messer eine Aussparung zugeordnet sein. Es ist aber auch denkbar, dass in dem Aussparungsbereich des Formwerkzeugoberteils nur eine Aussparung vorgesehen ist, in die beim Tiefziehen der Folie sämtliche Lochstempel oder Messer der Wechselleiste eingreifen. Auch das Vorsehen mehrerer Aussparungen derart, dass beim Tiefziehen jeweils einer oder mehrere Lochstempel oder ein oder mehrere Messer in eine Aussparung eingreifen, ist denkbar.

Das Formwerkzeugunterteil kann eine Vielzahl von Führungsvertiefungen aufweisen, wobei im angebrachten Zustand der Wechselleiste die Lochstempel oder Messer jeweils zumindest teilweise von einer entsprechenden Führungsvertiefung aufgenommen werden. Bei den Führungsvertiefungen kann es sich um konkave Bereiche des Formwerkzeugunterteils handeln. Insbesondere kann jeder Lochstempel oder jedes Messer in einer zugeordneten Führungsvertiefung aufgenommen werden. Die Führungsvertiefungen stabilisieren die Lochstempel oder Messer in ihrer angebrachten Position und erhöhen so die Positionierungsgenauigkeit, mit der die Folie gelocht oder geschlitzt wird.

Es kann eine Reihe von Wechselleisten vorgehalten werden, um die momentan verwendete Wechselleiste je nach Bedarf schnell austauschen zu können. Das Vorhalten mehrerer identischer Wechselleisten erlaubt ein schnelles Ersetzen der Lochstempel oder Messer bei Verschleiß. Es ist aber auch denkbar, Wechselleisten unterschiedlicher Konfigurationen vorzuhalten, um ein schnelles Umstellen des Betriebsmodus zu ermöglichen. Beispielsweise können sich die Wechselleisten in der geometrischen Anordnung der Befestigungsstellen für die Lochstempel oder die Messer unterscheiden. Wenn ein Tiefziehvorgang ohne Lochen oder Schlitzen der Folie durchgeführt werden soll, kann die Wechselleiste weggelassen werden. Je nach Auslegung der Formstation kann dies jedoch zur Folge haben, dass eine möglicherweise zur Abstützung auf der Wechselleiste vorgesehene Dichtung unwirksam wird. Daher kann ein Vorsehen einer Blindleiste ohne Lochstempel oder Messer sinnvoll sein. Diese kann anstelle einer Wechselleiste angebracht werden, wenn die Folie nicht gelocht oder geschlitzt werden soll, und mit einer Dichtung der Formstation zusammenwirken.

Es hat sich gezeigt, dass je nach Art und Eigenschaften der Folie die Verwendung von Lochstempeln oder Messern zu besseren Ergebnissen führt. Daher kann es insbesondere vorteilhaft sein, zwei Wechselleisten vorzusehen, die lösbar alternativ an dem Aufnahmebereich des Formwerkzeugunterteils anbringbar sind. Eine erste Wechselleiste kann eine Vielzahl von Lochstempeln aufweisen und eine zweite Wechselleiste eine Vielzahl von Messern aufweisen. So lässt sich die Formstation schnell von Lochstempeln auf Messer umrüsten, wenn beispielsweise eine andere Folie verwendet wird.

Besonders vorteilhaft ist es, wenn zum Umrüsten von Lochstempeln auf Messer oder von Messern auf Lochstempel lediglich die Wechselleisten ausgetauscht werden müssen. Dies kann dadurch erreicht werden, dass in dem Aussparungsbereich des Formwerkzeugoberteils die Vielzahl von Aussparungen derart vorgesehen ist, dass beim Tiefziehen der Folie bei angebrachter erster Wechselleiste (mit Lochstempeln) die Lochstempel in die Aussparungen eingreifen, um die Folie zu lochen oder zu schlitzen, und beim Tiefziehen der Folie bei angebrachter zweiter Wechselleiste (mit Messern) die Messer in die (selben) Aussparungen eingreifen, um die Folie zu schlitzen. Alternativ oder zusätzlich können die Führungsvertiefungen des Formwerkzeugunterteils derart ausgebildet sein, dass im angebrachten Zustand der ersten Wechselleiste (mit Lochstempeln) die Lochstempel jeweils zumindest teilweise von einer Führungsvertiefung aufgenommen werden und im angebrachten Zustand der zweiten Wechselleiste (mit Messern) die Messer jeweils zumindest teilweise von einer Führungsvertiefung aufgenommen werden.

Bevorzugterweise sind die Konturen der Messer der zweiten Wechselleiste an die Konturen der Lochstempel der ersten Wechselleiste angepasst. Auch dadurch wird erreicht, dass zum Umrüsten von Lochstempeln auf Messer oder von Messern auf Lochstempel außer dem Austauschen der Wechselleisten keine oder möglichst wenige weitere Änderungen an der Formstation vorgenommen werden müssen.

Insbesondere kann eine Länge der Lochstempel (bezogen auf einen Lochstempel) in Erstreckungsrichtung der Wechselleiste im Wesentlichen einer Länge der Messer (bezogen auf ein Messer) in Erstreckungsrichtung der Wechselleiste entsprechen. Die Länge der Lochstempel der ersten Wechselleiste kann der Länge der Messer der zweiten Wechselleiste insbesondere bis auf eine Abweichung von höchstens 10 % der größeren Länge entsprechen. So wird einerseits gewährleistet, dass die erste Wechselleiste und die zweite Wechselleiste beide zu den Aussparungen des Formwerkzeugoberteils und den Führungsvertiefungen des Formwerkzeugunterteils passen. Andererseits kann gewährleistet werden, dass mit der ersten Wechselleiste bearbeitete Folien in derselben Siegelstation weiterverarbeitet werden können wie mit der zweiten Wechselleiste bearbeitete Folien. Hierzu ist es auch vorteilhaft, wenn der in Längsrichtung der Wechselleiste gesehene Abstand zwischen den Lochstempeln der ersten Wechselleiste im Wesentlichen dem Abstand zwischen den Messern der zweiten Wechselleiste entspricht. Insbesondere kann der Abstand zwischen zwei benachbarten Lochstempeln der ersten Wechselleiste von dem Abstand zwischen benachbarten Messern der zweiten Wechselleiste um höchstens 10 % des größeren Abstands abweichen. Dazu kann jeweils der größte Abstand zwischen zwei benachbarten Lochstempeln der ersten Wechselleiste mit dem größten Abstand zwischen zwei benachbarten Messern der zweiten Wechselleiste verglichen werden.

Besonders vorteilhaft ist es, wenn die Konturen der Messer der zweiten Wechselleiste vollständig einem Teil der Konturen der Lochstempel der ersten Wechselleiste entsprechen.

Es ist ebenfalls vorteilhaft, wenn die Konturen der Messer der zweiten Wechselleiste nicht über von Konturen der Lochstempel der ersten Wechselleiste eingeschlossene Bereiche hinausgehen. So kann gewährleistet werden, dass eine ursprünglich für die Verwendung mit den Lochstempeln der ersten Wechselleiste ausgelegte Formstation auch mit den Messern der zweiten Wechselleiste verwendbar ist.

Die Erfindung betrifft ebenfalls eine Tiefziehverpackungsmaschine mit einer erfindungsgemäßen Formstation. Wie oben beschrieben, werden durch die Formstation durch Tiefziehen Verpackungsmulden in einer Unterfolie ausgebildet. Mit den Lochstempeln oder Messern werden Evakuierungsöffnungen eingebracht. Die Tiefziehverpackungsmaschine kann zudem eine Fördervorrichtung umfassen, mit der die Unterfolie von der Formstation zu einer Siegelstation der Tiefziehverpackungsmaschine gefördert wird. Dort werden die zwischenzeitlich befüllten Verpackungsmulden mit einer Oberfolie bedeckt, woraufhin durch die Evakuierungsöffnungen Atmosphärenluft aus der Verpackung gesaugt wird und ggf. Gas eingeleitet wird. Daraufhin werden die Unterfolie und die Oberfolie beispielsweise durch Ultraschallschweißen verbunden. Die Tiefziehverpackungsmaschine kann des Weiteren eine Schneidevorrichtung zum Trennen der einzelnen Verpackungen aufweisen.

Im Folgenden wird die Erfindung anhand von Ausführungsformen mit den beigefügten Zeichnungen erläutert. Dabei zeigen:
- Figur 1:: eine schematische Darstellung eines Ausschnitts einer Tiefziehverpackungsmaschine mit einer Formstation gemäß einer Ausführungsform;
- Figur 2:: eine schematische Darstellung des Formwerkzeugunterteils der Formstation mit anbringbaren Wechselleisten gemäß der Ausführungsform von Fig. 1;
- Figur 3:: eine schematische Schnittansicht durch die Formstation mit angebrachten Wechselleisten gemäß der Ausführungsform von Fig. 1;
- Figur 4A:: einen Ausschnitt einer schematischen Schnittdarstellung der Formstation mit einer angebrachten Wechselleiste mit Messern gemäß der Ausführungsform von Fig. 1;
- Figur 4B:: einen Ausschnitt einer schematischen Schnittdarstellung der Formstation mit einer angebrachten Wechselleiste mit Lochstempeln gemäß der Ausführungsform von Fig. 1;
- Figur 5A:: eine schematische Draufsicht auf die Kontur eines Lochstempels einer Wechselleiste einer Formstation;
- Figur 5B:: eine schematische Draufsicht auf die Kontur eines Messers einer Wechselleiste einer Formstation; und
- Figur 6:: eine schematische Perspektivansicht einer Wechselleiste einer Formstation gemäß einer Ausführungsform mit Lochstempeln.

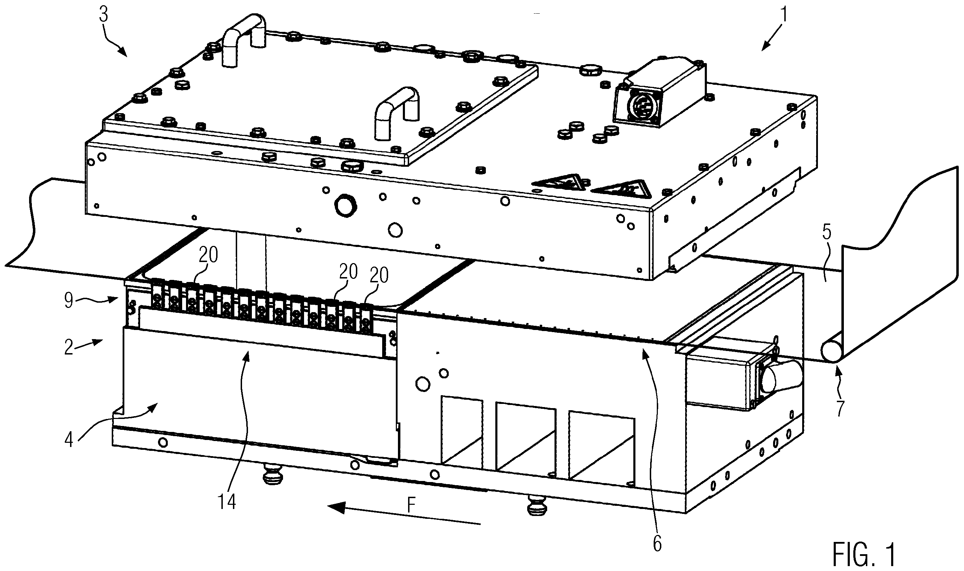

Fig. 1 zeigt eine Perspektivansicht eines Ausschnitts einer Tiefziehverpackungsmaschine 1 mit einer Formstation 2 gemäß einer Ausführungsform. Die Formstation 2 umfasst ein Formwerkzeugoberteil 3 und ein Formwerkzeugunterteil 4, die dazu ausgelegt sind, zum Tiefziehen einer zwischen dem Formwerkzeugunterteil 4 und dem Formwerkzeugoberteil 3 gelegenen Folie 5 zusammenzuwirken. In Betrieb formt die Formstation 2 durch Tiefziehen Verpackungsmulden in der Folie 5. Dazu können in dem Formwerkzeugunterteil 4 der gewünschten Form der Verpackungsmulden entsprechende Formmatrizen (nicht gezeigt) vorgesehen sein. Das Tiefziehen der Folie 5 kann rein mechanisch durch Zusammenwirken der Formmatrizen im Formwerkzeugunterteil 4 mit entsprechenden Formstempeln (nicht gezeigt) im Formwerkzeugoberteil 3 erfolgen. Alternativ oder zusätzlich kann die Folie 5 mittels Druckluft von dem Formwerkzeugoberteil 3 in die Formmatrizen des Formwerkzeugunterteils 4 gepresst werden und/oder durch Unterdruck in dem Formwerkzeugunterteil 4 in die Formmatrizen gesaugt werden.

Um die Folie 5 formbar zu machen, kann sie vor dem Tiefziehen mittels einer Heizvorrichtung 6 der Tiefziehverpackungsmaschine 1 erwärmt werden. Mittels einer nicht vollständig gezeigten Fördervorrichtung 7 der Tiefziehverpackungsmaschine 1 wird die Folie 5 von der Heizvorrichtung 6 entlang einer Förderrichtung F in die Formstation 2 verbracht. Nach dem Tiefziehen können die Verpackungsmulden mit Packgut gefüllt werden. Die Folie mit den gefüllten Verpackungsmulden kann dann weiter zu einer nicht gezeigten Siegelstation gefördert werden, wo die Verpackungsmulden nach einem Evakuieren und vorzugsweise einem Begasen der Verpackungen mit einem Schutzgas mit einer Oberfolie versiegelt und damit abgeschlossen werden.

Um das Evakuieren und Begasen der Verpackung ermöglichende Öffnungen in die Folie 5 schneiden zu können, ist in der in Fig. 1 gezeigten Ausführungsform an einem Aufnahmebereich 9 des Formwerkzeugunterteils 4 eine Wechselleiste 14 lösbar angebracht, die eine Vielzahl von Messern 20 trägt. Der Aufnahmebereich 9 ist seitlich an dem Formwerkzeugunterteil 4 vorgesehen.

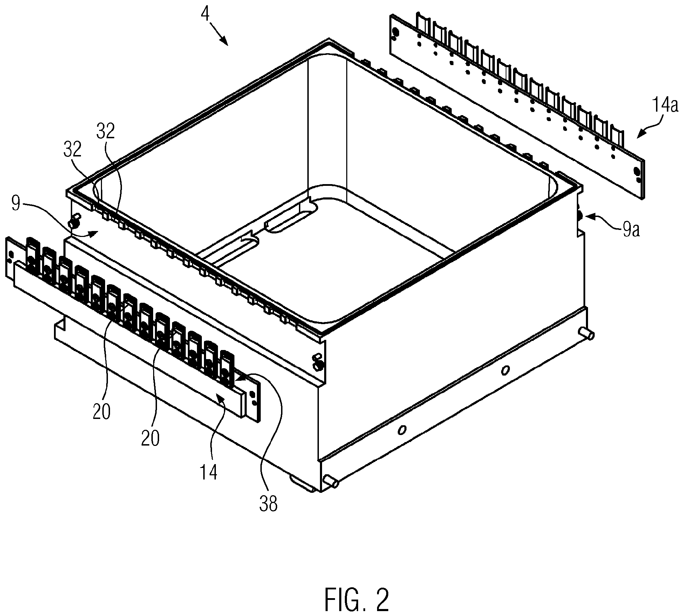

Fig. 2 zeigt das Formwerkzeugunterteil 4 aus Fig. 1, nachdem die Wechselleiste 14 von dem Aufnahmebereich 9 entfernt wurde. Wie hier ersichtlich, ist gemäß der gezeigten Ausführungsform an der dem Aufnahmebereich 9 gegenüberliegenden Seite des Formwerkzeugunterteils 4 ein weiterer Aufnahmebereich 9a vorgesehen, an dem eine weitere Wechselleiste 14a lösbar anbringbar ist. Im Folgenden wird nur einer der Aufnahmebereiche 9 mit den dazugehörigen Wechselleisten 12, 14 diskutiert. Der optional vorgesehene zweite Aufnahmebereich 9a mit den zugehörigen Wechselleisten 14a kann analog ausgebildet werden. Wie in den Fig. 1 und 2 gezeigt, kann die Wechselleiste 14 über eine Schraubverbindung an dem Formwerkzeugunterteil 4 lösbar angebracht werden. Es ist jedoch auch denkbar, die Wechselleiste 14 auf andere Art und Weise lösbar an dem Formwerkzeugunterteil 4 anzubringen, beispielsweise magnetisch oder über eine lösbare Clip-Verbindung.

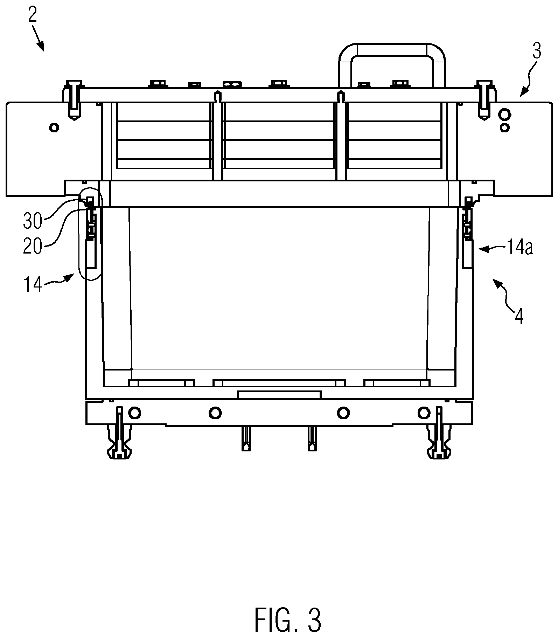

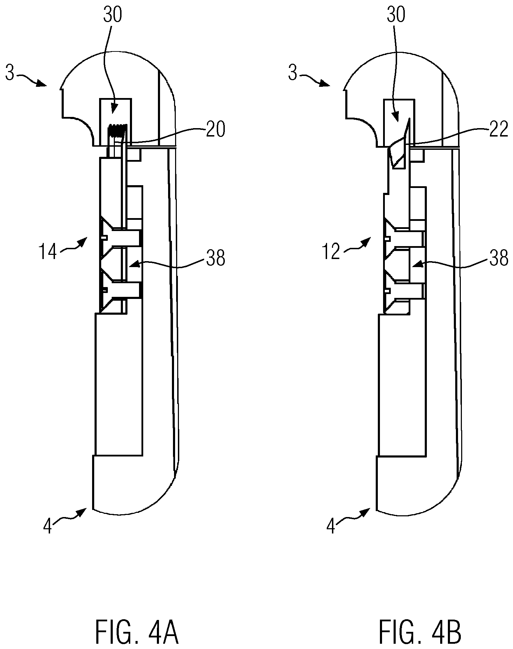

Fig. 3 zeigt eine schematische Schnittansicht durch die in Fig. 1 gezeigte Formstation 2, wobei die Schnittebene senkrecht zur Förderrichtung F steht. In Fig. 3 stehen das Formwerkzeugunterteil 4 und das Formwerkzeugoberteil 3 in der Stellung zueinander, in der sie sich beim Tiefziehen der Folie 5 befinden. Wie insbesondere in dem in Fig. 4A gezeigten Ausschnitt von Fig. 3 ersichtlich, greifen beim Tiefziehen der Folie 5 die Messer 20 der Wechselleiste 14 jeweils in eine einer Vielzahl von Aussparungen 30 eines Aussparungsbereich des Formwerkzeugoberteils 3 ein, so dass die Folie 5 geschlitzt wird. Die Aussparungen 30 sind analog zu der Anordnung der Messer 20 in Förderrichtung F hintereinander angeordnet.

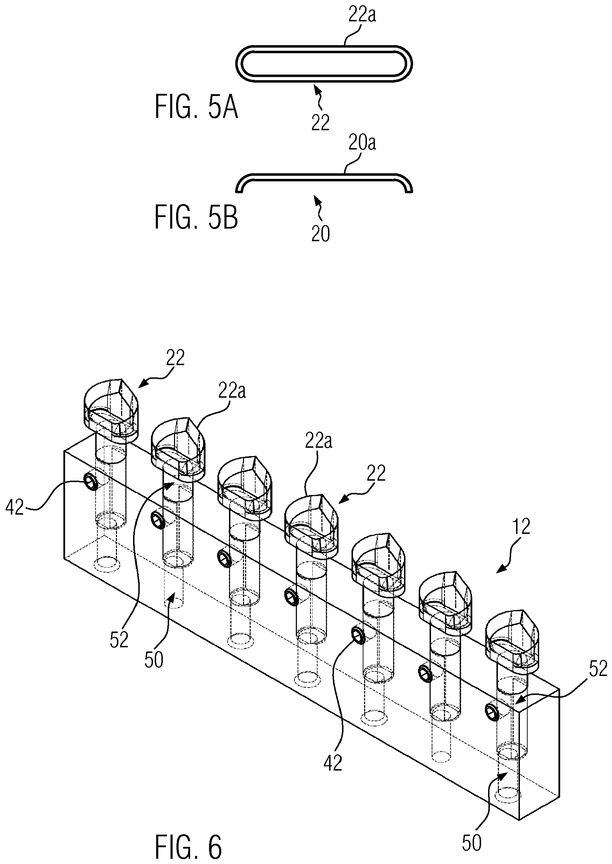

In der gezeigten Ausführungsform umfasst die Formstation 2 zusätzlich zu der in den Fig. 1, 2, 3 und 4A gezeigten Wechselleiste 14 mit Messern 20 eine in Fig. 4B (und mit alternativer Form der Lochstempel 22 in Fig. 6) gezeigte Wechselleiste 12 mit Lochstempeln 22. Die Lochstempel 22 sind ebenfalls dazu ausgelegt, beim Tiefziehen Evakuierungsöffnungen in die Folie 5 einzubringen. Abhängig von den jeweiligen Einsatzbedingungen (beispielsweise der verwendeten Folie oder der Art der Verpackung) kann die Wechselleiste 12 mit den Lochstempeln 22 (im Folgenden "erste Wechselleiste 12") oder, alternativ, die Wechselleiste 14 mit den Messern 20 (im Folgenden "zweite Wechselleiste 14") lösbar an den Aufnahmebereich 9 des Formwerkzeugunterteils 4 angebracht werden. Das Vorsehen der Lochstempel 22 bzw. der Messer 20 auf den Wechselleisten 12, 14 ermöglicht, die Lochstempel 22 bzw. die Messer 20 schnell und einfach in einem Arbeitsschritt durch Austauschen der Wechselleiste 12, 14 durch eine neue Wechselleiste 12, 14 zu wechseln und vereinfacht daher die Wartung der Formstation 2. Zudem lässt sich die Formstation 2 zwischen zwei aufeinanderfolgenden Einsätzen schnell und einfach von Messern 20 auf Lochstempel 22 (durch Austausch einer zweiten Wechselleiste 14 durch eine erste Wechselleiste 12) oder von Lochstempeln 22 auf Messer 20 (durch Austausch einer ersten Wechselleiste 12 durch eine zweite Wechselleiste 14) umrüsten.

Es wäre aber auch denkbar, weitere Wechselleisten 12, 14 zum Ersatz verschlissener Messer 20 oder Lochstempel 22 vorzusehen, oder Wechselleisten 12, 14 mit verschiedenen geometrischen Anordnungen von Lochstempeln 22 oder Messern 20, die z.B. bei einem Wechsel des Verpackungsformats getauscht werden können. Denkbar wäre es auch, lediglich eine oder mehrere, insbesondere identische, erste Wechselleisten 12 (mit Lochstempeln 22) oder eine oder mehrere, insbesondere identische, zweite Wechselleisten 14 (mit Messern 20) vorzusehen, wenn die Formstation 2 ausschließlich mit Messern 20 oder ausschließlich mit Lochstempeln 22 betrieben wird. Auch in diesem Fall verbleibt der Vorteil der vereinfachten Wartung.

Besonders vorteilhaft ist es, wenn beim Wechseln zwischen einer ersten Wechselleiste 12 und einer zweiten Wechselleiste 14 keine weiteren Anpassungen an der Formstation 2 vorgenommen werden müssen. Fig. 4B zeigt eine zur Fig. 4A analoge Schnittansicht in einer Tiefziehposition der Formwerkzeugteile 3, 4, wobei die zweite Wechselleiste 14 aus Fig. 4A (mit Messern 20) durch eine erste Wechselleiste 12 (mit Lochstempeln 22) ersetzt wurde. Ersichtlicherweise greifen die Lochstempel 22 beim Tiefziehen der Folie 5 ebenfalls in die Aussparungen 30 des Formwerkzeugoberteils 3 ein. Da gemäß der gezeigten Ausführungsform die Aussparungen 30 des Formwerkzeugoberteils 3 geeignet geformt sind, sind sie sowohl für den Einsatz mit den Lochstempeln 22 der ersten Wechselleiste 12 als auch zum Einsatz mit den Messern 20 der zweiten Wechselleiste 14 gut geeignet.

Wie insbesondere aus Fig. 2 ersichtlich, weist das Formwerkzeugunterteil 4 der gezeigten Ausführungsform eine Vielzahl von Führungsvertiefungen 32 auf, so dass im angebrachten Zustand der zweiten Wechselleiste 14 die Messer 20 der zweiten Wechselleiste 14 jeweils teilweise von einer zugeordneten Führungsvertiefung 32 aufgenommen werden. Dadurch wird die Positionierung der Wechselleiste 14 erleichtert und die Messer 20 werden in ihrer eingebauten Position stabilisiert. Die Führungsvertiefungen 32 sind zudem derart geformt, dass, wenn die erste Wechselleiste 12 an dem Aufnahmebereich 9 des Formwerkzeugunterteils 4 angebracht ist, die Lochstempel 22 jeweils zumindest teilweise von einer zugeordneten Führungsvertiefung 32 aufgenommen werden.

Damit die Formstation 2, insbesondere die Aussparungen 30 des Formwerkzeugoberteils 3 und die Führungsvertiefungen 32 des Formwerkzeugunterteils 4 sowohl mit den Lochstempeln 22 der ersten Wechselleiste 12 als auch mit den Messern 20 der zweiten Wechselleiste 14 kompatibel sind, ist es vorteilhaft, wenn die Konturen 20a der Messer 20 der zweiten Wechselleiste 14 an die Konturen 22a der Lochstempel 22 der ersten Wechselleiste 12 angepasst sind.

Fig. 5A zeigt in Draufsicht schematisch die Kontur 22a eines Lochstempels 22 der ersten Wechselleiste 12 gemäß einer Ausführungsform. Fig. 5B zeigt die zugehörige, angepasste Kontur 20a eines Messers 20 der zweiten Wechselleiste 14 dieser Ausführungsform. Bei dem Messer 20 handelt es sich um ein gebogenes Messer 20 mit einer gebogenen Kontur 20a. Vorzugsweise haben alle Lochstempel 22 bzw. alle Messer 20 einer Wechselleiste 12, 14 dieselben Konturen. In der Ausführungsform der Fig. 5A und 5B entsprechen die Konturen 20a der Messer 20 der zweiten Wechselleiste 14 vollständig einem Teil der Konturen 22a der Lochstempel 22 der ersten Wechselleiste 12. Damit kann auf einfache Art und Weise eine sehr gute Anpassung der Konturen 20a, 22a aneinander erreicht werden, so dass die erste Wechselleiste 12 und die zweite Wechselleiste 14 ohne Weiteres gegeneinander austauschbar sind.

Alternativ könnten die Lochstempel 22 der ersten Wechselleiste 12 auch gemäß der Darstellung von Fig. 6 geformte Konturen 22a aufweisen und die Messer 20 der zugehörigen zweiten Wechselleiste 14 zum Beispiel wie in den Fig. 1 und 2 mit einer gebogenen Kontur 20a ausgebildet sein (dies entspricht auch der Messerform aus Fig. 5B). In diesem Fall gehen die Konturen 20a der Messer 20 der zweiten Wechselleiste 14 nicht über von den Konturen 22a der Lochstempel 22 der ersten Wechselleiste 12 eingeschlossene Bereiche hinaus. Die Lochstempel 22 gemäß der in Fig. 6 gezeigten Ausführungsform haben jeweils eine Kontur 22a, die in Bezug auf die Richtung, in der das Formwerkzeugunterteil 4 und das Formwerkzeugoberteil 3 voneinander beabstandet sind, ein nicht-konstantes Höhenprofil aufweist. So kann bei geeigneter Wahl des Höhenprofils der Konturen 22a der Lochstempel 22 jeweils nur ein Teil der Kontur 22a tatsächlich zum Schneiden der Folie 5 beitragen, so dass die Folie 5 nicht gelocht, sondern geschlitzt wird. Beim Schlitzen werden vorzugsweise nicht-lineare Schnitte in die Folie 5 eingebracht, so dass in der Folie 5 Klappen entstehen, die scharnierartig zum Freigeben von Öffnungen in der Folie 5 beweglich sind. Dies kann auch durch gekrümmte Messer 22 erreicht werden.

In der gezeigten Ausführungsform sind die Lochstempel 22 oder Messer 20 lösbar an der jeweiligen Wechselleiste 12, 14 befestigt. Dazu ist an der Wechselleiste 12, 14 für jeden Lochstempel 22 oder für jedes Messer 20 eine Befestigungsstelle 38 vorgesehen. Die Lochstempel 22 oder Messer 20 können zur Wartung, insbesondere zum Schärfen, aus der Wechselleiste 12, 14 genommen und später wieder eingesetzt werden oder durch neue Lochstempel 22 oder Messer 20 ersetzt werden. In den Ausführungsformen der Fig. 1 bis 4B sind die Lochstempel 22 bzw. die Messer 20 an der jeweiligen Befestigungsstelle 38 an die Wechselleiste 12, 14 geschraubt. In der in Figur 6 gezeigten Ausführungsform einer ersten Wechselleiste 12 mit Lochstempeln 22 umfassen die Befestigungsstellen 38 Öffnungen 52 in der Wechselleiste 12, in die die Lochstempel 22 eingeschoben werden können. Über mit den Öffnungen 52 verbundene Schraublöcher 42, die insbesondere ein Gewinde aufweisen können, können die Lochstempel 22 in der jeweiligen Öffnung 52 mit Feststellschrauben festgelegt werden.

Alternativ kann die Vielzahl von Lochstempeln 22 oder Messern 20 integral an der jeweiligen Wechselleiste 12, 14 verbaut sein. Beispielsweise können die Lochstempel 22 oder die Messer 20 bei der Herstellung der Wechselleiste 12, 14, z.B. aus Kunststoff oder Metall, in einem Gießverfahren eingegossen worden sein.

Zum leichteren Austausch der Lochstempel 22 ist in der in Figur 6 gezeigten Ausführungsform in der ersten Wechselleiste 12 eine Vielzahl von Austauschkanälen 50 vorgesehen, die jeweils mit einer einen Lochstempel 22 aufnehmenden Öffnung 52 in Verbindung stehen. Mittels eines in den Austauschkanal 50 einbringbaren Werkzeugs kann der betreffende Lochstempel 22 aus der ersten Wechselleiste 12 herausgedrückt und dann durch einen neuen Lochstempel 22 ersetzt werden.

## Patentansprüche

1. Formstation (2) für eine Tiefziehverpackungsmaschine (1),
wobei die Formstation (2) ein Formwerkzeugoberteil (3) und ein Formwerkzeugunterteil (4) umfasst, die dazu ausgelegt sind, zum Tiefziehen einer zwischen dem Formwerkzeugunterteil (4) und dem Formwerkzeugoberteil (3) gelegenen Folie (5) zusammenzuwirken,
**gekennzeichnet durch**
eine an einem seitlich an dem Formwerkzeugunterteil (4) vorgesehenen Aufnahmebereich (9) des Formwerkzeugunterteils (4) lösbar anbringbare erste Wechselleiste (12), die eine Vielzahl von Lochstempeln (22) oder Messern (20) trägt,
wobei eine relative Lage der Lochstempel (22) oder Messer (20) zueinander durch ihre Position an der ersten Wechselleiste (12) festgelegt ist, und
wobei die Formstation durch Anbringen oder Entfernen der ersten Wechselleiste (12) zwischen einem Betriebsmodus, in dem die Folie (5) beim Tiefziehen gelocht oder geschlitzt wird, und einem Betriebsmodus umstellbar ist, bei dem kein Lochen oder Schlitzen erfolgt.

2. Formstation gemäß Anspruch 1, wobei in einem Aussparungsbereich des Formwerkzeugoberteils (3) eine Vielzahl von Aussparungen (30) derart vorgesehen ist, dass beim Tiefziehen der Folie (5) die Lochstempel (22) oder Messer (20) in die Aussparungen (30) eingreifen, um die Folie (5) zu lochen oder zu schlitzen.

3. Formstation gemäß einem der vorangehenden Ansprüche, wobei das Formwerkzeugunterteil (4) eine Vielzahl von Führungsvertiefungen (32) aufweist, derart dass im angebrachten Zustand der ersten Wechselleiste (12) die Lochstempel (22) oder Messer (20) jeweils zumindest teilweise von einer Führungsvertiefung (32) aufgenommen werden.

4. Formstation gemäß Anspruch 1, wobei die erste Wechselleiste (12) die Vielzahl von Lochstempeln (22) aufweist, und wobei zudem eine alternativ zu der ersten Wechselleiste (12) an dem Aufnahmebereich (9) des Formwerkzeugunterteils (4) anbringbare zweite Wechselleiste (14) vorgesehen ist, die eine Vielzahl von Messern (20) aufweist.

5. Formstation gemäß Anspruch 4, wobei in einem Aussparungsbereich des Formwerkzeugoberteils (3) eine Vielzahl von Aussparungen (30) derart vorgesehen ist, dass beim Tiefziehen der Folie (5) bei angebrachter erster Wechselleiste (12) die Lochstempel (22) in die Aussparungen (30) eingreifen, um die Folie (5) zu lochen oder zu schlitzen, und beim Tiefziehen der Folie (5) bei angebrachter zweiter Wechselleiste (14) die Messer (20) in die Aussparungen (30) eingreifen, um die Folie (5) zu schlitzen.

6. Formstation gemäß Anspruch 4 oder 5, wobei das Formwerkzeugunterteil (4) eine Vielzahl von Führungsvertiefungen (32) aufweist, derart dass im angebrachten Zustand der ersten Wechselleiste (12) die Lochstempel (22) jeweils zumindest teilweise von einer Führungsvertiefung (32) aufgenommen werden und im angebrachten Zustand der zweiten Wechselleiste (14) die Messer (20) jeweils zumindest teilweise von einer Führungsvertiefung (32) aufgenommen werden.

7. Formstation gemäß einem der Ansprüche 4 bis 6, wobei die Messer (20) der zweiten Wechselleiste (14) Konturen (20a) aufweisen, die an die Konturen (22a) der Lochstempel (22) der ersten Wechselleiste (12) angepasst sind.

8. Formstation gemäß einem der Ansprüche 4 bis 6, wobei die Messer (20) der zweiten Wechselleiste (14) Konturen (20a) haben, die vollständig einem Teil der Konturen (22a) der Lochstempel (22) der ersten Wechselleiste (12) entsprechen.

9. Formstation gemäß einem der Ansprüche 4 bis 6, wobei Konturen (20a) der Messer (20) der zweiten Wechselleiste (14) nicht über von Konturen (22a) der Lochstempel (22) der ersten Wechselleiste (12) eingeschlossene Bereiche hinausgehen.

10. Formstation gemäß einem der vorangehenden Ansprüche, wobei die erste und/oder die zweite Wechselleiste (12, 14) an dem Aufnahmebereich (9) anschraubbar sind/ist.

11. Formstation gemäß einem der vorangehenden Ansprüche, wobei der Aufnahmebereich (9) gegenüber dem Rest des Formwerkzeugunterteils (4) in Richtung des Formwerkzeugoberteils (3) beweglich ist.

12. Formstation gemäß einem der vorangehenden Ansprüche, wobei die Lochstempel (22) oder die Messer (20) jeweils lösbar an einer zugehörigen einer Vielzahl von Befestigungsstellen (38) der ersten Wechselleiste (12) oder der zweiten Wechselleiste (14) angebracht sind.

13. Formstation gemäß einem der vorangehenden Ansprüche, wobei in der ersten Wechselleiste (12) eine Vielzahl von Austauschkanälen (50) vorgesehen ist, die jeweils mit einer einen Lochstempel (22) aufnehmenden Öffnung (52) in Verbindung stehen, so dass mittels eines in einen Austauschkanal (50) einbringbaren Werkzeugs die Lochstempel (22) aus der ersten Wechselleiste (12) herausgedrückt werden können.

14. Formstation gemäß einem der Ansprüche 1 bis 11, wobei die Lochstempel (22) oder die Messer (20) integral an der ersten Wechselleiste (12) oder der zweiten Wechselleiste (14) verbaut sind.

15. Formstation gemäß einem der vorangehenden Ansprüche, wobei die erste und/oder die zweite Wechselleiste (12, 14) in Bezug auf das Formwerkzeugunterteil (4) höhenverstellbar ist.

## Claims

1. A forming station (2) for a thermoform packaging machine (1),
wherein the forming station (2) comprises a forming tool upper part (3) and a forming tool lower part (4), which are configured for cooperating so as to thermoform a film (5) positioned between the forming tool lower part (4) and the forming tool upper part (3),
**characterized by**
a first change bar (12), which is adapted to be releasably attached to a reception area (9) of the forming tool lower part (4) provided laterally on the forming tool lower part (4) and which carries a plurality of punches (22) or blades (20),
wherein a position of the punches (22) or of the blades (20) relative to one another is determined by their position on the first change bar (12), and
wherein by attaching or removing the first change bar (12), the forming station can be changed over between an operating mode in which slits or holes are cut into the film (5) during thermoforming and an operating mode in which no cutting of slits or holes takes place.

2. The forming station according to claim 1, wherein, in a recess area of the forming tool upper part (3), a plurality of recesses (30) is provided such that, during thermoforming of the film (5), the punches (22) or blades (20) engage the recesses (30) so as to perforate or slit the film (5).

3. The forming station according to any one of the preceding claims, wherein the forming tool lower part (4) is provided with a plurality of guide indentations (32) in such a way that, in the attached condition of the first change bar (12), each of the punches (22) or blades (20) will at least partially be accommodated in a respective guide indentation (32).

4. The forming station according to claim 1, wherein the first change bar (12) is provided with the plurality of punches (22), and wherein a second change bar (14) is additionally provided, which, alternatively to the first change bar (12), is adapted to be attached to the reception area (9) of the forming tool lower part (4) and which is provided with a plurality of blades (20).

5. The forming station according to claim 4, wherein, in a recess area of the forming tool upper part (3), a plurality of recesses (30) is provided such that, during thermoforming of the film (5) in the attached condition of the first change bar (12), the punches (22) will engage the recesses (30) so as to perforate or slit the film (5), and, during thermoforming of the film (5) in the attached condition of the second change bar (14), the blades (20) will engage the recesses (30) so as to slit the film (5) .

6. The forming station according to claim 4 or 5, wherein the forming tool lower part (4) is provided with a plurality of guide indentations (32) in such a way that, in the attached condition of the first change bar (12), each of the punches (22) will at least partially be accommodated in a respective guide indentation (32), and, in the attached condition of the second change bar (14), each of the blades (20) will at least partially be accommodated in a respective guide indentation (32).

7. The forming station according to any one of claims 4 to 6, wherein the blades (20) of the second change bar (14) have contours (20a) which are adapted to the contours (22a) of the punches (22) of the first change bar (12).

8. The forming station according to any one of claims 4 to 6, wherein the blades (20) of the second change bar (14) have contours (20a) which fully correspond to the contours (22a) of the punches (22) of the first change bar (12).

9. The forming station according to any one of claims 4 to 6, wherein contours (20a) of the blades (20) of the second change bar (14) do not extend beyond areas delimited by contours (22a) of the punches (22) of the first change bar (12).

10. The forming station according to any one of the preceding claims, wherein the first and/or the second change bar (12, 14) is/are adapted to be screw-fastened to the reception area (9).

11. The forming station according to any one of the preceding claims, wherein the reception area (9) is movable relative to the rest of the forming tool lower part (4) in the direction of the forming tool upper part (3).

12. The forming station according to any one of the preceding claims, wherein each of the punches (22) or blades (20) is releasably attached to the first change bar (12) or the second change bar (14) at an associated one of a plurality of fastening sites (38).

13. The forming station according to any one of the preceding claims, wherein the first change bar (12) has provided therein a plurality of exchange passages (50), which each communicate with a respective opening (52) accommodating a punch (22), so that the punches (22) can be pushed out of the first change bar (12) by means of a tool that is adapted to be inserted into an exchange passage (50).

14. The forming station according to any one of claims 1 to 11, wherein the punches (22) or the blades (20) are installed on the first change bar (12) or on the second change bar (14) such that they are integral with the respective change bar.

15. The forming station according to any one of the preceding claims, wherein the first and/or the second change bar (12, 14) is/are vertically adjustable with respect to the forming tool lower part (4).

## Revendications

1. Poste de formage (2) pour une machine d'emballage par emboutissage (1),
dans lequel le poste de formage (2) comprend une partie supérieure de moule (3) et une partie inférieure (4) conçues pour coopérer afin d'emboutir un film (5) situé entre la partie inférieure de moule (4) et la partie supérieure de moule (3),
**caractérisé par**
une première baguette interchangeable (12) pouvant être mise en place de manière amovible au niveau d'une région de réception (9) de la partie inférieure de moule (4) prévue latéralement au niveau de la partie inférieure de moule (4), et qui porte une pluralité de poinçons (22) ou de couteaux (20),
dans lequel une position relative des poinçons (22) ou des couteaux (20) les uns par rapport aux autres est déterminée par leur position sur la première baguette interchangeable (12), et
dans lequel il est possible de faire évoluer le poste de formage entre un mode de fonctionnement au sein duquel le film (5) est perforé ou fendu pendant l'emboutissage et un mode de fonctionnement au sein duquel aucune perforation ou fendage n'a lieu, grâce à la mise en place ou au retrait de la première baguette interchangeable (12).

2. Poste de formage selon la revendication 1, dans lequel une pluralité d'évidements (30) sont prévus dans une région évidée de la partie supérieure de moule (3) de telle manière que, lors de l'emboutissage du film (5), les poinçons (22) ou les couteaux (20) s'engagent dans les évidements (30) afin de poinçonner ou fendre le film (5).

3. Poste de formage selon l'une quelconque des revendications précédentes, dans lequel la partie inférieure de moule (4) présente une pluralité de renfoncements de guidage (32) de telle manière que, dans l'état où la première baguette interchangeable (12) est en place, les poinçons (22) ou les couteaux (20) sont accueillis respectivement au moins partiellement par un renfoncement de guidage (32).

4. Poste de formage selon la revendication 1, dans lequel la première baguette interchangeable (12) présente la pluralité de poinçons (22), et dans lequel une seconde baguette interchangeable (14) pouvant être mise en place au niveau de la région de réception (9) de la partie inférieure de moule (4) et qui présente une pluralité de couteaux (20) est en outre prévue en variante par rapport à la première baguette interchangeable (12).

5. Poste de formage selon la revendication 4, dans lequel une pluralité d'évidements (30) sont prévus dans une région d'évidement de la partie supérieure de moule (3) de telle manière que, lors de l'emboutissage du film (5) avec la première baguette interchangeable (12) en place, les poinçons (22) s'engagent dans les évidements (30) afin de poinçonner ou fendre le film (5), et lors de l'emboutissage du film (5) avec la seconde baguette interchangeable (14) en place, les couteaux (20) s'engagent dans les évidements (30) afin de fendre le film (5).

6. Poste de formage selon la revendication 4 ou 5, dans lequel la partie inférieure de moule (4) présente une pluralité de renfoncements de guidage (32) de telle manière que, lorsque la première baguette interchangeable (12) est en place, les poinçons (22) sont accueillis respectivement au moins partiellement par un renfoncement de guidage (32) et, lorsque la seconde baguette interchangeable (14) est en place, les couteaux (20) sont accueillis respectivement au moins partiellement par un renfoncement de guidage (32).

7. Poste de formage selon l'une quelconque des revendications 4 à 6, dans lequel les couteaux (20) de la seconde baguette interchangeable (14) présentent des contours (20a) qui sont adaptés aux contours (22a) des poinçons (22) de la première baguette interchangeable (12).

8. Poste de formage selon l'une quelconque des revendications 4 à 6, dans lequel les couteaux (20) de la seconde baguette interchangeable (14) présentent des contours (20a) qui correspondent complètement à une partie des contours (22a) des poinçons (22) de la première baguette interchangeable (12).

9. Poste de formage selon l'une quelconque des revendications 4 à 6, dans lequel les contours (20a) des couteaux (20) de la seconde baguette interchangeable (14) ne s'étendent pas au-delà des régions entourées par les contours (22a) des poinçons (22) de la première baguette interchangeable (12).

10. Poste de formage selon l'une quelconque des revendications précédentes, dans lequel la première et/ou la seconde baguette interchangeable (12, 14) peu(ven)t être vissée(s) au niveau de la région de réception (9).

11. Poste de formage selon l'une quelconque des revendications précédentes, dans lequel la région de réception (9) est mobile par rapport au reste de la partie inférieure de moule (4) en direction de la partie supérieure de moule (3).

12. Poste de formage selon l'une quelconque des revendications précédentes, dans lequel les poinçons (22) ou les couteaux (20) sont mis en place respectivement de manière amovible au niveau d'un emplacement de fixation associé parmi une pluralité d'emplacements de fixation (38) de la première baguette interchangeable (12) ou de la seconde baguette interchangeable (14).

13. Poste de formage selon l'une quelconque des revendications précédentes, dans lequel une pluralité de canaux d'échange (50) en liaison respectivement avec une ouverture (52) accueillant un poinçon (22) sont prévus dans la première baguette interchangeable (12), de sorte que les poinçons (22) peuvent être poussés hors de la première baguette interchangeable (12) au moyen d'un outil pouvant être introduit dans un canal d'échange (50).

14. Poste de formage selon l'une quelconque des revendications 1 à 11, dans lequel les poinçons (22) ou les couteaux (20) sont installés d'un seul tenant au niveau de la première baguette interchangeable (12) ou de la seconde baguette interchangeable (14).

15. Poste de formage selon l'une quelconque des revendications précédentes, dans lequel la première et/ou la seconde baguette interchangeable (12, 14) peu(ven)t être réglée(s) en hauteur par rapport à la partie inférieure de moule (4).
